# EUROPEAN PATENT APPLICATION

(11) **EP 2 500 796 A1**
(43) Date of publication of application: **19.09.2012**
(21) Application number: 11158159.1
(22) Date of filing: 14.03.2011
(51) Int. Cl.: G06F 3/033

(54) **Pen-shaped input apparatus**

(71) Applicant: Aver Information Inc., New Taipei City 23673 (TW)
(72) Inventor: Chen, Hsu-Chih, New Taipei City (TW); Huang, Yu-Wen, New Taipei City (TW); Chao, Yih-Sheng, New Taipei City (TW)
(74) Representative: Lang, Christian

(57) **Abstract**

A pen-shaped input apparatus is disclosed in the disclosure. The pen-shaped input apparatus includes a body portion, a capturing module, a transparent spherical portion and a plurality of light sources. The body portion has a side surface. The capturing module is disposed within the body portion and adjacent to the side surface. The capturing module includes an optical sensor and a lens unit. The transparent spherical portion is disposed on the side surface. The transparent spherical portion, the lens unit and the optical sensor are lined on a capturing optical axis. The light sources are located between the side surface of the body portion and the transparent spherical portion. The light sources are symmetrically disposed around the capturing optical axis.

## Description

### Field of Invention

The present disclosure relates to a pen-shaped input apparatus. More particularly, the present disclosure relates to an optical structure on a pen-shaped input apparatus.

### Description of Related Art

"Mouse" and "keyboard" are common input devices in present personal computer applications. However, those input devices are quite different from a pen, the most common tool used for writing or drawing. A beginner in using personal computer must spend a long time practicing how to control the cursor on the screen by the mouse or memorizing the distribution of characters on the keyboard. Therefore, a mouse-pen is developed and widespread in various applications.

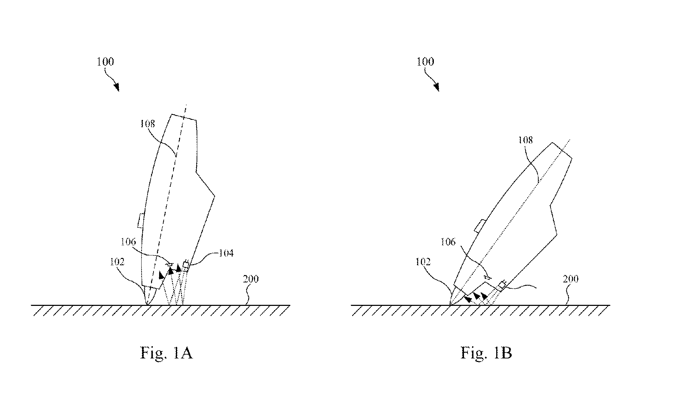

Please refer to Fig. 1A and Fig. 1 B, which are schematic diagrams illustrating the optical structure in a traditional mouse-pen 100. As shown in Fig. 1 A, the traditional mouse-pen 100 includes a tip portion 102, a light source 104 and a capturing module 106. A detection radiation emitted by the light source 104 is reflected back to the capturing module 106 by an object surface 200. Accordingly, the capturing module 106 may sense the movement of the mouse-pen 100.

However, the traditional mouse-pen 100 has a directional axis 108. Because the holding gestures of users can be different, and it may change the angle between the tip portion 102 and the object surface 200, such that the angle of the directional axis 108 is not stable. If the angle of the directional axis 108 of the mouse-pen 100 is varied, the distance between the object surface 200 and the capturing module 106 will be changed. In this case, the distance between the object surface 200 and the capturing module 106 may be out of the valid depth of field range of the capturing module 106, such that the capability of image identification of the capturing module 106 will be reduced.

Besides, as shown in Fig. 1B, when the angle of the directional axis 108 of the mouse-pen 100 is varied, the reflection angle of the detection radiation emitted by the light source 104 on the object surface 200 will be changed, such that part of the detection radiation may not return to the capturing module 106. In this case, the returned detection radiation collected by the capturing module 106 may suffer a problem of insufficient radiance. The problem of insufficient radiance of the returned detection radiation will be more serious when the detection radiation is reflected on a smooth object surface 200, because the smooth object surface 200 rarely scatters the detection radiation.

Besides, the mouse-pen usually has a narrow internal space limited by its long shape. Therefore, most mouse-pen locates its capturing component away from the object surface and locates its light source component adjacent to the object surface, due to the space limitation. However, because the capturing component is disposed away from the object surface, an optical pattern is prolonged and an inlet light intensity to the capturing component is reduced. In addition, implementing the light source (e.g. light emitting diode, LED) close to the object surface may cause dark spots because of the Near-Field effect of the LED.

On the mouse-pen with the LED light source, the dark spots will be more severe when the LED is closer to the object surface. The detection radiation from the light source (i.e. LED) will be not even on the object surface. Besides, the dark spots are usually located near the target position on the object surface during the image capturing, such that the inlet light intensity to the capturing component is reduced.

In summary, the optical structure in a traditional mouse-pen has an unstable radiance of the detection radiation. Therefore, a new design of a pen-shaped input apparatus is needed for corresponding to various angles between the pen-shaped input apparatus and the object surface and improving the stability of the radiance of the detection radiation.

### SUMMARY

In order to solve aforesaid problems, a pen-shaped input apparatus is disclosed in this disclosure. The pen-shaped input apparatus includes a transparent spherical portion for contacting with an object surface (e.g. desktop). The transparent spherical portion can be utilized to ensure the distance between the capturing module and the object surface, for better capturing stability. Besides, the pen-shaped input apparatus includes a plurality of light sources symmetrically disposed around an optical axis for capturing, for elevating the inlet light intensity during the optical detection.

Therefore, an aspect of the disclosure is to provide a pen-shaped input apparatus, which includes a body portion, a capturing module, a transparent spherical portion and a plurality of light sources. The body portion has a side surface. The capturing module is disposed within the body portion and adjacent to the side surface. The capturing module includes an optical sensor and a lens unit. The transparent spherical portion is disposed on the side surface. The transparent spherical, the lens unit and the optical sensor are lined on an optical axis for capturing. The light sources are located between the side surface of the body portion and the transparent spherical portion respectively. The light sources are symmetrically disposed around the optical axis for capturing.

According to an embodiment of the disclosure, the transparent spherical portion is in a hemisphere shape. The optical axis for capturing substantially penetrates a center of a circle of the transparent spherical portion. In this case, the transparent spherical portion has a spherical surface and a sectional surface. The sectional surface faces the side surface of the body portion, and the spherical surface is used for facing an object surface.

According to an embodiment of the disclosure, the transparent spherical portion includes a material selected from the group consisted of plastic, acrylic, glass and polycarbonate.

According to an embodiment of the disclosure, the light sources include a first light source and a second light source. The first light source and the second light sources are symmetrically disposed on opposite sides of the optical axis for capturing.

According to an embodiment of the disclosure, the light sources comprise a first light source, a second light source, a third light source, and a fourth light source. The first light source, the second light source, the third light source and the fourth light source are symmetrically disposed on four sides around the optical axis for capturing.

According to an embodiment of the disclosure, the light sources are symmetrically disposed to surround the optical axis for capturing.

According to an embodiment of the disclosure, the pen-shaped input apparatus further includes a light-guiding structure. The light guiding structure is disposed adjacent to the plurality of light sources. In an embodiment, the light-guiding structure includes a plurality of light-guiding rods in circular sector shape. The light-guiding rods in circular sector shape correspond to the plurality of light sources respectively. In another embodiment, the light-guiding structure includes a plurality of light-guiding rods in lateral stair shape. The light-guiding rods in lateral stair shape correspond to the light sources respectively. An inlet light direction of each of the light-guiding rods is substantially perpendicular to the optical axis for capturing. An outlet light direction of each of the light-guiding rods is substantially parallel to the optical axis for capturing.

### BRIEF DESCRIPTION OF THE DRAWINGS

The invention can be more fully understood by reading the following detailed description of the embodiments, with reference made to the accompanying drawings as follows:
Fig. 1A is a schematic diagram illustrating the optical structure in a traditional mouse-pen;
Fig. 1 B is a schematic diagram illustrating the optical structure in a traditional mouse-pen;
Fig. 2A is a sectional view diagram illustrating a pen-shaped input apparatus according to an embodiment of the invention;
Fig. 2B is a sectional view diagram illustrating a pen-shaped input apparatus according to an embodiment of the invention;
Fig. 3A is a schematic diagram illustrating the allocation of the transparent spherical portion and the light sources in Fig. 2A and Fig. 2B;
Fig. 3B is a schematic diagram illustrating the allocation of the transparent spherical portion and the light sources according to another embodiment of the pen-shaped input apparatus in this disclosure;
Fig. 3C is a schematic diagram illustrating the allocation of the transparent spherical portion and the light sources according to another embodiment of the pen-shaped input apparatus in this disclosure;
Fig. 4A is a schematic diagram illustrating the light-guiding rods in circular sector shape in front of the light source according to an embodiment of the invention; and
Fig. 4B is a schematic diagram illustrating the light-guiding rods in lateral stair shape in front of the light sources according to an embodiment of the invention.

### DETAILED DESCRIPTION

In order to solve problems in traditional mouse-pen, e.g. unstable subject distance due to different holding gestures or unstable detection radiance due to a light source on singular side, a pen-shaped input apparatus is disclosed in this disclosure. The pen-shaped input apparatus in the disclosure includes a transparent spherical portion for contacting with an object surface (e.g. desktop). The transparent spherical portion can be utilized to ensure the distance between the capturing module and the object surface, for better capturing stability. Besides, the pen-shaped input apparatus includes a plurality of light sources symmetrically disposed around an optical axis for capturing, for elevating the inlet light intensity during the optical detection.

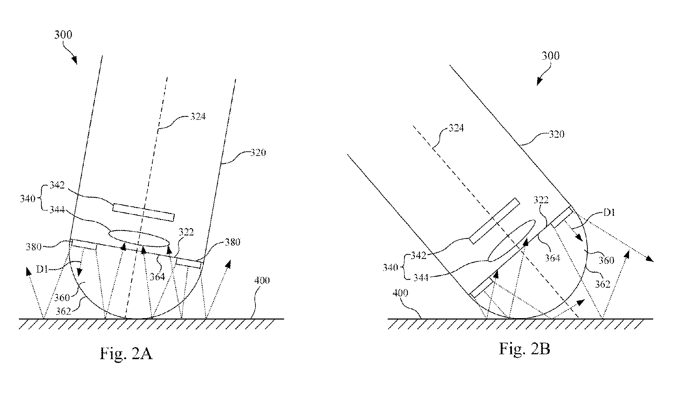

Please refer to Fig. 2A and Fig. 2B, which are sectional view diagrams illustrating a pen-shaped input apparatus 300 according to an embodiment of the invention. As shown in Fig. 2A and Fig. 2B, the pen-shaped input apparatus 300 includes a body portion 320, a capturing module 340, a transparent spherical portion 360 and a plurality of light sources 380. In the embodiment in Fig. 2A and Fig. 2B, there are two light sources 380, but the invention is not limited to this.

In this embodiment, the body portion 320 can be formed in a long stick shape, which can be grasped easily by users. The body portion 320 has a side surface 322. In practical applications, the side surface 322 in an outward direction facing an object surface 400. In this embodiment, the capturing module 340, transparent spherical portion 360 and the light sources 380 are disposed on the body portion 320 and located adjacent to the side surface 322 substantially.

The capturing module 340 is disposed within the body portion 320 and located adjacent to the side surface 322. As shown in the figures, the capturing module 340 includes an optical sensor 342 and a lens unit 344. The lens unit 344, located in front of the optical sensor 342, is used for gathering the inlet light toward the optical sensor 342, so as to broaden the range of sensible angle of the optical sensor 342. In practical applications, the optical sensor 342 can be a charge-coupled device (CCD) optical sensor, a complementary metal-oxide-semiconductor (CMOS) optical sensor or other equivalent optical sensors. The lens unit 344 may include a singular lens or a lens set with multiple lenses, but the invention is not limited to this.

The transparent spherical portion 360 is disposed on the side surface 322. In this embodiment, the transparent spherical portion 360 is in a hemisphere shape. The transparent spherical portion 360 has a spherical surface 362 and a sectional surface 364. The sectional surface 364 faces the side surface 322 of the body portion 320. The spherical surface 362 is used for contacting with the object surface 400 outside.

Besides, the transparent spherical portion 360 includes a material selected from the group consisted of plastic, acrylic (also called Polymethylmethacrylate, PMMA), glass and polycarbonate (PC).

In this embodiment, the transparent spherical 360, the lens unit 344 and the optical sensor 342 are substantially lined on a straight line in sequence. The straight line forms an optical axis for capturing 324 of the pen-shaped input apparatus 300. As shown in Fig. 2A and Fig. 2B in this embodiment, the optical axis for capturing 324 may extend along a center axis of the body portion 320. Besides, the optical axis for capturing 324 substantially penetrates a center of a circle of the transparent spherical portion 360.

When a user changes the angle between the pen-shaped input apparatus 300 and the contacted objected surface 400, the total traveling distance of the detection radiation (which is emitted by the light source 380, reflected by the object surface 400 and collected by the capturing module 340) may remain steady without critical variation, because that the transparent spherical portion 360 in the hemisphere shape has a constant radius from the circumference to the center.

In the embodiment, the pen-shaped input apparatus 300 includes two light sources 380 disposed between the side surface 322 of the body portion 320 and the transparent spherical portion 360 respectively. In this embodiment, these two light sources 380 are symmetrically disposed on opposite sides of the optical axis for capturing 324, but the invention is not limited to this.

Utilizing the light sources 380 on both sides to project light on the object surface 400 may ensure sufficient detection radiation reflected back to the capturing module 340 by the object surface 400 no matter what angle it is of the optical axis for capturing 324 relative to the object surface 400. The optical sensor 342 of the capturing module 340 may receive the detection radiation, and the optical sensor 342 may further transmit the detected data to a process unit or a processor (not shown), so as to determine the coordinate of the position of the pen-shaped input apparatus 300.

Besides, in the embodiment of Fig. 2A and Fig. 2B, the optical sensor 342 of the capturing module 340 and the lens unit 344 of the capturing module 340 are arranged on the same axis (coaxial). In other words, the optical axis for capturing 324 of the optical sensor 342 is aligned with the center axis of the lens unit 344, and the optical axis for capturing 324 penetrates the optical center of the lens unit 344, but the invention is not limited to this. In another embodiment, the optical sensor can be disposed out of the center axis of the lens unit. In other words, there may be a specific angle between the optical axis for capturing of the optical sensor and the center axis of the lens unit. In this case, the lens unit in this embodiment can be an aspheric lens structure. Therefore, the optical sensor 342 of the capturing module 340 and the lens unit 344 of the capturing module 340 may also be formed in a non-coaxial design.

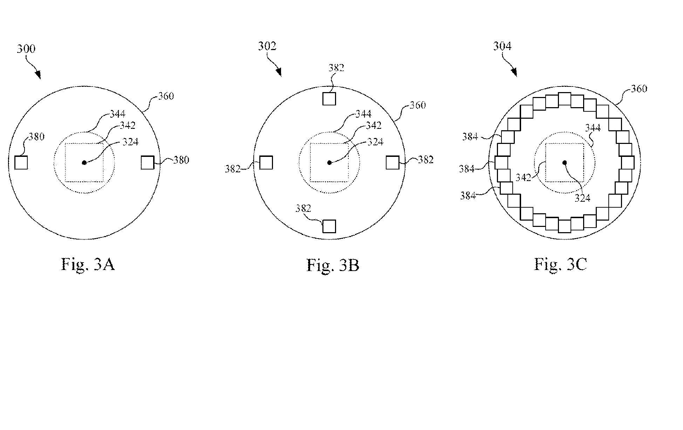

Please refer to Fig. 3A. Fig. 3A is a schematic diagram illustrating the allocation of the transparent spherical portion 360 and the light sources 380 in Fig. 2A and Fig. 2B. As shown in Fig. 3A, the pen-shaped input apparatus 300 in aforesaid embodiment has two light sources 380 symmetrically disposed on opposite sides of the optical axis for capturing 324. However, the invention is not limited to two light sources 380 or the allocation on both sides.

Please refer to Fig. 3B and Fig. 3C. Fig. 3B is a schematic diagram illustrating the allocation of the transparent spherical portion 360 and the light sources 382 according to another embodiment of the pen-shaped input apparatus 302 in this disclosure. Fig. 3C is a schematic diagram illustrating the allocation of the transparent spherical portion 360 and the light sources 384 according to another embodiment of the pen-shaped input apparatus 304 in this disclosure.

In the embodiment of Fig. 3B, the pen-shaped input apparatus 302 includes four light sources 382. These four light sources 382 are symmetrically disposed on four sides around the optical axis for capturing 324, e.g. on upper, lower, left and right sides. In the embodiment of Fig. 3C, the pen-shaped input apparatus 304 includes multiple light sources 384 (twenty-eight light sources in the embodiment of Fig. 3C). The multiple light sources 384 may be symmetrically disposed and closely arranged to surround the optical axis for capturing 324. The pen-shaped input apparatus 302 in Fig. 3B and the pen-shaped input apparatus 304 in Fig. 3C utilize more light sources disposed on different direction to ensure a steady detection radiation on each angle. Other internal structures inside the pen-shaped input apparatus 302 and the pen-shaped input apparatus 304 are substantially similar to the aforesaid embodiment of the pen-shaped input apparatus 300 (please refer to Fig. 2A and Fig. 2B).

However, the disclosure is not limited to have a specific amount of light sources (e.g. 2, 4, or 28 light sources in Fig.3A - Fig. 3C). In practical applications, the pen-shaped input apparatus of the disclosure may have 3~N light sources disposed equidistantly to achieve similar effect, wherein N is a positive integer bigger than three.

Besides, in order to make the distribution of the outlet light even, the pen-shaped input apparatus (e.g. the pen-shaped input apparatus 300~304) may further include a light-guiding structure. The light-guiding structure is disposed adjacent to aforesaid light sources.

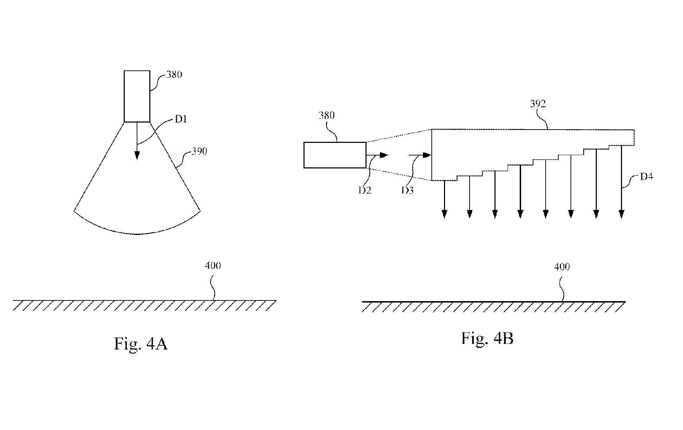

Take the pen-shaped input apparatus 300 in Fig. 2A and Fig .2B for example, there are light-guiding rods in circular sector shape disposed in front of each of the light sources 380. Each light-guiding rod in circular sector shape is located on an outlet light direction D1 of one light source 380. Please refer to Fig. 4A, which is a schematic diagram illustrating the light-guiding rods 390 in circular sector shape in front of the light source 380 according to an embodiment of the invention. As shown in the figure, the light-guiding rods 390 in circular sector shape correspond to the light sources 380 respectively. The inlet light direction and outlet light direction of the light-guiding rods 390 in circular sector shape is the same as the outlet light direction D1 of the light source 380. The light-guiding rods 390 in circular sector shape are utilized to distribute the radiation emitted by the light sources 380 evenly to a boarder outlet angle.

In Fig. 4A, the light sources 380 are direct type light sources, i.e. the outlet radiation of the light sources 380 are projected to the object surface 400 directly. However, the disclosure is not limited to this. Please refer to Fig. 4A, which is a schematic diagram illustrating the light-guiding rods 390 in circular sector shape in front of the light sources 380 according to an embodiment of the invention.

In another embodiment, the pen-shaped input apparatus may utilize lateral type light sources. Please refer to Fig. 4B, which is a schematic diagram illustrating the light-guiding rods 392 in lateral stair shape in front of the light sources 380 according to an embodiment of the invention. The light-guiding rods 392 in lateral stair shape correspond to the light sources 380 respectively. In this embodiment, the outlet light direction D2 of the light sources 380 is transverse, i.e. the outlet light direction D2 of the light sources 380 and the inlet light direction D3 of the light-guiding rods is substantially perpendicular to the optical axis for capturing (please refer to Fig. 2A and Fig. 2B at the same time). The outlet light direction D4 of the light-guiding rods is substantially parallel to the optical axis for capturing (please refer to Fig. 2A and Fig. 2B at the same time). Therefore, the pen-shaped input apparatus in the disclosure may adopt direct type or lateral type light sources, and the pen-shaped input apparatus with the light-guiding structure may have an even outlet light distribution.

In summary, the pen-shaped input apparatus in the disclosure includes a transparent spherical portion for contacting with an object surface (e.g. desktop). The transparent spherical portion can be utilized to ensure the distance between the capturing module and the object surface, for better capturing stability. Besides, the pen-shaped input apparatus includes a plurality of light sources symmetrically disposed around an optical axis for capturing, for elevating the inlet light intensity during the optical detection.

Although the present disclosure has been described in considerable detail with reference to certain embodiments thereof, other embodiments are possible. Therefore, the spirit and scope of the appended claims should not be limited to the description of the embodiments contained herein. It will be apparent to those skilled in the art that various modifications and variations can be made to the structure of the present disclosure without departing from the scope or spirit of the invention. In view of the foregoing, it is intended that the present disclosure cover modifications and variations of this invention provided they fall within the scope of the following claims.

## Claims

1. A pen-shaped input apparatus, comprising:
a body portion having a side surface;
a capturing module disposed within the body portion and adjacent to the side surface, the capturing module comprising an optical sensor and a lens unit;
a transparent spherical portion disposed on the side surface, the transparent spherical, the lens unit and the optical sensor being lined on an optical axis for capturing; and
a plurality of light sources located between the side surface of the body portion and the transparent spherical portion respectively, the plurality of light sources being symmetrically disposed around the optical axis for capturing.

2. The pen-shaped input apparatus of claim 1, wherein the transparent spherical portion is in a hemisphere shape, and the optical axis for capturing substantially penetrates a center of a circle of the transparent spherical portion.

3. The pen-shaped input apparatus of claim 2, wherein the transparent spherical portion has a spherical surface and a sectional surface, the sectional surface faces the side surface of the body portion, and the spherical surface is used for facing an object surface.

4. The pen-shaped input apparatus of claim 1, wherein the transparent spherical portion comprises a material selected from the group consisted of plastic, acrylic, glass and polycarbonate.

5. The pen-shaped input apparatus of claim 1, wherein the plurality of light sources comprise a first light source and a second light source, the first light source and the second light source are symmetrically disposed on opposite sides of the optical axis for capturing.

6. The pen-shaped input apparatus of claim 1, wherein the plurality of light sources comprise a first light source, a second light source, a third light source and a fourth light source, the first light source, the second light source, the third light source and the fourth light source are symmetrically disposed on four sides around the optical axis for capturing.

7. The pen-shaped input apparatus of claim 1, wherein the plurality of light sources are symmetrically disposed to surround the optical axis for capturing.

8. The pen-shaped input apparatus of claim 1, further comprising a light-guiding structure, and the light guiding structure being disposed adjacent to the plurality of light sources.

9. The pen-shaped input apparatus of claim 8, wherein the light-guiding structure comprises a plurality of light-guiding rods in circular sector shape, the plurality of light-guiding rods in circular sector shape correspond to the plurality of light sources respectively.

10. The pen-shaped input apparatus of claim 8, wherein the light-guiding structure comprises a plurality of light-guiding rods in lateral stair shape, the plurality of light-guiding rods in lateral stair shape correspond to the plurality of light sources respectively, an inlet light direction of each of the light-guiding rods is substantially perpendicular to the optical axis for capturing, an outlet light direction of each of the light-guiding rods is substantially parallel to the optical axis for capturing.

## Amended claims

### Amended claims in accordance with Rule 137(2) EPC.

**1.** A pen-shaped input apparatus (300, 302, 304), comprising:
a body portion (320) having a side surface (322);
a capturing module (340) disposed within the body portion (320) and adjacent to the side surface (322), the capturing module (340) comprising an optical sensor (342) and a lens unit (344);
a transparent spherical portion 360 disposed on the side surface 322, the transparent spherical portion (360), the lens unit (344) and the optical sensor being lined on an optical axis for capturing (324), wherein the transparent spherical portion (360) is in a hemisphere shape; and
a plurality of light sources (380, 382, 384) located between the side surface (322) of the body portion (320) and the transparent spherical portion (360) respectively, the plurality of light sources (380, 382, 384) being symmetrically disposed around the optical axis for capturing (324).

**2.** The pen-shaped input apparatus (300, 302, 304) of claim 1, wherein the optical axis for capturing (324) substantially penetrates a center of a circle of the transparent spherical portion (360).

**3.** The pen-shaped input apparatus (300, 302, 304) of claim 1, wherein the transparent spherical portion (360) has a spherical surface (364) and a sectional surface (362), the sectional surface (364) faces the side surface (322) of the body portion (320), and the spherical surface (362) is used for facing an object surface (400).

**4.** The pen-shaped input apparatus (300, 302, 304) of claim 1, wherein the transparent spherical portion (360) comprises a material selected from the group consisted of plastic, acrylic, glass and polycarbonate.

**5.** The pen-shaped input apparatus (300, 302, 304) of claim 1, wherein the plurality of light sources (380, 382, 384) comprise a first light source and a second light source, the first light source and the second light source are disposed on two opposite sides of the optical axis for capturing (324), and the first light source and the second light source are located at substantially the same distance away from the optical axis for capturing (324).

**6.** The pen-shaped input apparatus (302, 304) of claim 1, wherein the plurality of light sources (382, 384) comprise a first light source, a second light source, a third light source and a fourth light source, the first light source, the second light source, the third light source and the fourth light source are symmetrically disposed on four sides around the optical axis for capturing (324).

**7.** The pen-shaped input apparatus (300, 302, 304) of claim 1, wherein the plurality of light sources (380, 382, 384) are disposed close to each other and arranged in a round shape surrounding the optical axis for capturing (324).

**8.** The pen-shaped input apparatus (300, 302, 304) of claim 1, further comprising a light-guiding structure (390, 392), and the light guiding structure (390, 392) being disposed adjacent to the plurality of light sources (380, 382, 384).

**9.** The pen-shaped input apparatus (300, 302, 304) of claim 8, wherein the light-guiding structure (390) comprises a plurality of light-guiding rods in circular sector shape, the plurality of light-guiding rods in circular sector shape correspond to the plurality of light sources (380, 382, 384) respectively.

**10.** The pen-shaped input apparatus (300, 302, 304) of claim 8, wherein the light-guiding structure (392) comprises a plurality of light-guiding rods in lateral stair shape, the plurality of light-guiding rods in lateral stair shape correspond to the plurality of light sources (380, 382, 384) respectively, an inlet light direction (D3) of each of the light-guiding rods is substantially perpendicular to the optical axis for capturing (324), an outlet light direction (D4) of each of the light-guiding rods is substantially parallel to the optical axis for capturing (324).
